# EUROPEAN PATENT SPECIFICATION

(11) **EP 4 432 312 B1**
(45) Date of publication and mention of the grant of the patent: **05.08.2026**
(21) Application number: 22889477.0
(22) Date of filing: 08.11.2022
(51) Int. Cl.: H01B 7/42, B60L 53/302, F28D 15/02

(54) **CABLE STRUCTURE, CABLE COOLING DEVICE AND VEHICLE**
KABELSTRUKTUR, KABELKÜHLVORRICHTUNG UND FAHRZEUG
STRUCTURE DE CÂBLE, DISPOSITIF DE REFROIDISSEMENT DE CÂBLE ET VÉHICULE

(30) Priority: 08.11.2021 CN 202111313327
(43) Date of publication of application: 18.09.2024
(73) Proprietor: Changchun Jetty Automotive Technology Co., Ltd., Changchun, Jilin 130000 (CN)
(72) Inventor: WANG, Chao, Changchun City, Jilin 130000 (CN)
(74) Representative: Boult Wade Tennant LLP
(86) International application number: PCT/CN2022/130592
(87) International publication number: WO 2023/078456

(56) References cited:
- CN-A- 102 800 424
- CN-A- 102 930 932
- CN-A- 112 770 929
- CN-A- 113 192 667
- CN-A- 113 192 667
- CN-U- 206 098 029
- CN-U- 216 212 525
- CN-Y- 201 122 454
- JP-A- H0 982 145
- JP-A- H0 982 145
- US-A1- 2015 300 753

## Description

### RELATED APPLICATION

This application claims priority to Chinese Patent Application No. 202111313327.0, entitled "Cable structure, Cable cooling device and Vehicle" filed on November 08, 2021.

### FIELD OF TECHNOLOGY

The present disclosure relates to the technical field of electrical equipment, and in particular, to a cable structure, a cable cooling device and a vehicle.

### BACKGROUND

Long charging time of current electric vehicles has become a bottleneck restricting their widespread use. At present, the current for fast charging of electric vehicles reaches 150-400 A. The high current brings about high heat output of a charging cable, which is also the main reason for restricting the charging current of the electric vehicles.

In order to solve this problem, firstly, the cross-sectional area of the cable urgently needs to be enlarged to reduce the heat output of the cable, but the cost of the cable will be greatly increased. Secondly, the cable is cooled with a cooling technology.

At the current stage, liquid cooling and air cooling technologies are mostly used in cooling of high-current charging cables. While the liquid cooling technology has a good cooling effect, an additional cooling pipeline needs to be added in the cable, resulting in a complex system structure, extremely high requirements for safety and stability, and increased cost. The air cooling technology has the problems of low cooling efficiency, additional noise, and influence on noise, vibration and harshness (NVH) of a complete vehicle due to limited mounting dimension and space.

Therefore, a cable capable of being quickly cooled is urgently needed in the field of current transmission.

The cable structure, cable cooling device and vehicle are known in the prior art, e.g., from CN206098029U, CN102800424A, JPH0982145A, US2015/300753A1,

### SUMMARY

An objective of the present disclosure is to provide a cable structure, a cable cooling device, and a vehicle, so as to alleviate the technical problem that the cable is difficult to cool.

The present invention is set out in the appended set of claims.

The present disclosure has the following characteristics and advantages:
1. The cooling jacket is attached to the cable body, the cooling jacket absorbs heat of the cable body, and the cooling liquid flows through the cooling jacket to take away the heat, such that the cable body is cooled, and the temperature rise of a cable circuit is significantly decreased. The cooling jacket is wound and matched with the cable body, and can deform along with the cable body, has a good attachment property, can be matched according to the outer diameter of the cable body, and has the advantage of being simple and flexible to assemble.
2. The inlet joint of water and the return joint of water are disposed at one end or two ends of a cable respectively, and the arrangement mode can be selected based on the length of the cable and the specific environment for assembly, such that a better assembly and cooling solution is implemented.
3. The cooling jacket is spiral and the inner diameter of the cooling jacket is less than the inner diameter of the cable, such that the cooling jacket can be conveniently wound around the cable and in close contact with the cable, thereby implementing better heat transfer.
4. The temperature sensor is disposed so that the real-time temperature of the cable can be quickly obtained, and the pump and the cooling system can be used in a timely manner for temperature adjustment.
5. The cooling jacket is assembled on the periphery of the cable body, instead of being integrated with the cable body; when damaged, the cooling jacket can be directly replaced without disassembling the cable body; the cooling jacket is wound around the cable body in a spiral mode, such that the cable body does not need to be powered off when disassembled, thereby facilitating repair and replacement; moreover, the cable body is protected by an external insulating layer, such that when the cooling jacket leaks the cooling liquid, the cable body will not be short-circuited.

### BRIEF DESCRIPTION OF THE DRAWINGS

The following drawings are only intended to schematically illustrate and explain the present disclosure and do not limit the scope of the present disclosure. In the drawings:
FIG. 1 shows a schematic structural diagram of an embodiment of a cable provided by the present disclosure, not covered by claims;
FIG. 2 shows a schematic structural diagram of a cable structure according to the invention;
FIG. 3 shows an enlarged view of the cable structure shown in FIG. 1;
FIG. 4 shows an enlarged view of the cable structure shown in FIG. 2;
FIG. 5 to FIG. 8 show schematic diagrams of an outlet water connector and a connecting structure thereof in the cable structure shown in FIG. 1;
FIG. 9 and FIG. 10 show schematic diagrams of an inlet joint of water and a connecting structure thereof in the cable structure shown in FIG. 1;
FIG. 11 to FIG. 13 show schematic diagrams of an outlet water connector and an inlet joint of water and a connecting structure thereof in the cable structure shown in FIG. 2;
FIG. 14 to FIG. 18 show schematic diagrams of matching between a cable body and a cooling jacket in a cable structure according to the invention; and
FIG. 19 shows a schematic diagram of a cable cooling device provided by the present disclosure.

### DESCRIPTION OF THE EMBODIMENTS

To understand the technical features, objective, and effects of the present disclosure more clearly, specific embodiments of the present disclosure are now described with reference to the accompanying drawings. In the description of the present disclosure, "a plurality of" means two or more, unless otherwise stated.

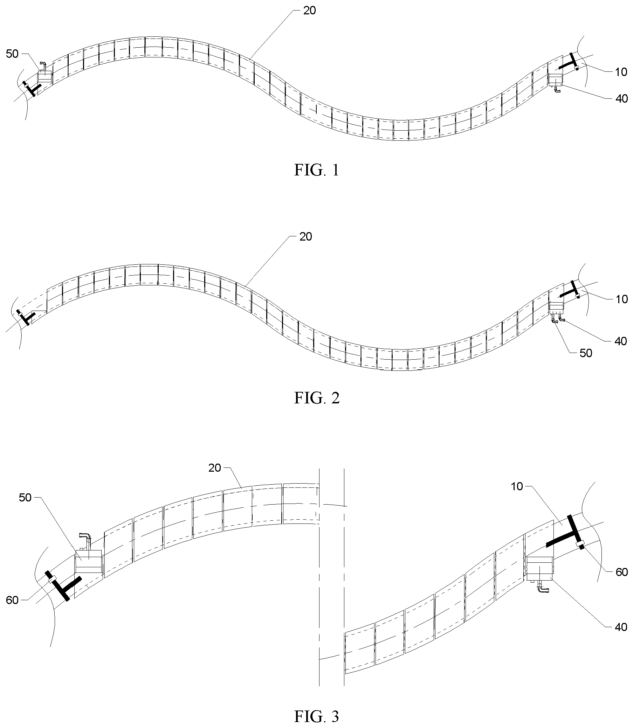

The present disclosure provides a cable structure. As shown in FIG. 1 to FIG. 15, the cable structure includes a cable body 10 and a cooling jacket 20, where the cooling jacket 20 is wound around the cable body 10; and the cooling jacket 20 is provided with a lumen 30, is connected to an inlet joint of water 40 and a return joint of water 50 which communicate with the lumen 30, and is constructed so that cooling liquid enters the lumen 30 through the inlet joint of water 40 and flows out through the return joint of water 50.

The cooling jacket 20 is attached to the cable body 10, the cooling jacket 20 absorbs heat of the cable body 10, and the cooling liquid flows through the cooling jacket 20 to take away the heat, such that the cable body 10 is cooled, and the temperature rise of a cable circuit is significantly decreased. The cooling jacket 20 is wound and matched with the cable body 10, and can deform along with the cable body 10, has a good attachment property, can be matched according to the outer diameter of the cable body 10, and has the advantage of being simple and flexible to assemble.

The cable structure may be applied to an electric vehicle, and the cable body 10 may be a high-power cable for the electric vehicle. The cooling jacket 20 may be made from polyvinyl chloride (PVC) or silica gel.

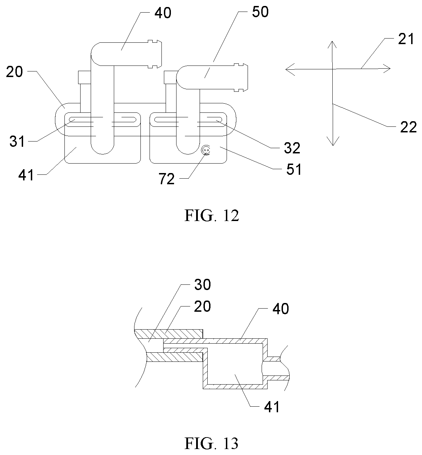

A cross section of the lumen 30 has a width direction 21 and a thickness direction 22, and a sidewall of the lumen 30 in the width direction 21 is in contact with the cable body 10. The cross section of the lumen 30 is flat, and a dimension of the lumen 30 in the width direction 21 is greater than a dimension of the lumen 30 in the thickness direction 22. According to the invention, as shown in FIG. 12, the sidewall of the lumen 30 has a large area of contact with the cable body 10, which facilitates the cooling jacket 20 to absorb heat of the cable body 10. For example, the cross section of the lumen 30 is rectangular.

In an embodiment, a ratio of a dimension in a width direction 21 to a dimension in a thickness direction 22 of the lumen 30 ranges from 1 : 1 to 10 : 1. The cooling effect of the cooling jacket 20 is determined by the dimensions of the lumen 30 in the width and thickness directions. To verify the influence of the ratio of the dimension in the width direction to the dimension in the thickness direction of the lumen 30 on the performance of the cooling jacket 20, ten cables with the same sectional area, material, and length are selected by the inventor and applied with the same current, jacket cavities 30 with different ratios of dimensions in width directions to dimensions in thickness directions are used to cool the cables, and temperature rises of the cables are obtained and recorded in Table 1.

The experimental method is that in a closed environment, cables with jacket cavities 30 with different ratios of dimensions in width directions to dimensions in thickness directions are used and applied with the same current, stable temperatures before and after power on are recorded, difference operations are made, and absolute values are taken. In this embodiment, the temperature rise of less than 50 K is a qualified value.

**Table 1: Influence of jacket cavities 30 with different ratios of dimensions in width directions to dimensions in thickness directions on temperature rises of cable structure**

| Ratio of dimension in width direction to dimension in thickness direction of lumen 30 | | | | | | | | | | | | |
|---|---|---|---|---|---|---|---|---|---|---|---|---|
| 0.5:1 | 0.8:1 | 1:1 | 2:1 | 3:1 | 5:1 | 6:1 | 7:1 | 8:1 | 9:1 | 10:1 | 11:1 | 12:1 |

| Temperature rise (K) of cable structure | | | | | | | | | | | | |
|---|---|---|---|---|---|---|---|---|---|---|---|---|
| 63.8 | 52.5 | 49.6 | 47.7 | 45.2 | 43.5 | 41.4 | 37.1 | 33.2 | 30.9 | 27.5 | 50.8 | 52.3 |

It can be seen from the above table that when the ratio of the dimension in the width direction 21 to the dimension in the thickness direction 22 of the lumen 30 is less than 1 : 1, the dimension in the width direction 21 of the lumen 30 is less than the dimension in the thickness direction 22 of the lumen 30, the area of contact between the sidewall of the lumen 30 and the cable body 10 is small so that the cooling jacket 20 is not facilitated to absorb heat of the cable body 10, and the temperature rise of the cable structure is greater than the qualified value; and when the ratio of the dimension in the width direction to the dimension in the thickness direction of the lumen 30 is greater than 10 : 1, since there is no internal support structure in the middle of the lumen 30 in the width direction, the too large width easily causes inner walls in the middle of the lumen 30 to be in contact with each other, the velocity of the cooling liquid passing through the cooling jacket 20 is reduced, the cooling effect is weakened, and the temperature rise of the cable structure is greater than the qualified value. Therefore, the ratio of the dimension in the width direction to the dimension in the thickness direction of the lumen 30 is set by the inventor to a range from 1 : 1 to 10 : 1.

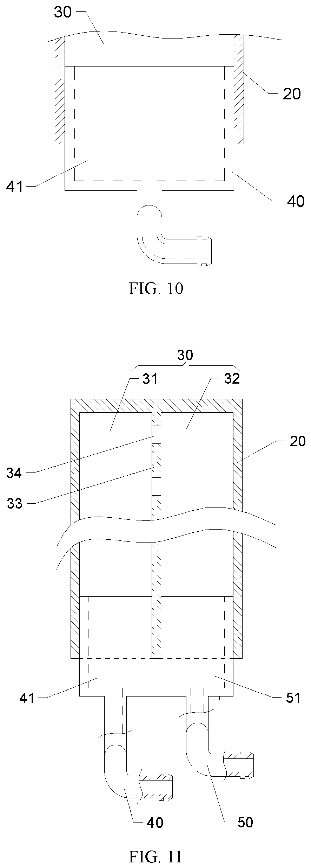

According to the invention, the lumen 30 includes a first cavity 31 and a second cavity 32 which are formed side by side. As shown in FIG. 11 to FIG. 13, a connection channel 34 is disposed at a first end of the cooling jacket 20, and the connection channel 34 communicates with the first cavity 31 and the second cavity 32 separately; the inlet joint of water 40 and the return joint of water 50 are both disposed at a second end of the cooling jacket 20; moreover, the inlet joint of water 40 communicates with the first cavity 31, and the return joint of water 50 communicates with the second cavity 32.

Further, a sidewall of the first cavity 31 and a sidewall of the second cavity 32 are both in contact with the cable body 10. As shown in FIG. 11 and FIG. 12, the first cavity 31 and the second cavity 32 are distributed along the width direction 21. The sidewall of the first cavity 31 in the width direction 21 and the sidewall of the second cavity 32 in the width direction 21 are both in contact with the cable body 10, such that the cooling liquid can absorb heat of the cable body 10 in both inflow and outflow processes, and the cooling liquid is facilitated to give full play to its cooling efficiency.

As shown in FIG. 11, the cooling jacket 20 includes a lumen partition 33 disposed between the first cavity 31 and the second cavity 32. The lumen partition 33 separates the first cavity 31 from the second cavity 32, such that the cooling liquid flows from the second end of the cooling jacket 20 through the first cavity 31 to the first end of the cooling jacket 20, and then flows through the second cavity 32 to the second end of the cooling jacket 20. A structural form of the connection channel 34 is not limited to one. For example, the connection channel 34 is a communicating tube with one end communicating with the first cavity 31 and the other end communicating with the second cavity 32. In an embodiment of the present disclosure, the connection channel 34 is a through hole formed in the lumen partition 33.

In another embodiment, not covered by claims, as shown in FIG. 1, FIG. 3, and FIG. 5 to FIG. 10, the inlet joint of water 40 and the return joint of water 50 are disposed at two ends of the cooling jacket 20 respectively, and the cooling liquid flows unidirectionally through the cooling jacket 20.

The application of the cable structure is relatively flexible. The embodiment that the inlet j oint of water 40 and the return joint of water 50 are disposed at two ends as shown in FIG.1, not covered by claims, or the embodiment that the inlet joint of water 40 and the return joint of water 50 are disposed at the same end as shown in FIG. 2 can be selected according to an application environment, such as considering an arrangement and mounting process for high-voltage electrical equipment of a complete vehicle, so as to flexibly match a general arrangement and general assembly process route.

In an embodiment, the return joint of water 50 is provided with a return water buffer cavity 51. As shown in FIG. 12, and FIG. 13, a cross-sectional area of the return water buffer cavity 51 is greater than a cross-sectional area of the lumen 30 communicating with the return joint of water 50. The return water buffer cavity 51 plays a role in buffering the cooling liquid, such that a flow velocity of the cooling liquid is more stable, the cooling liquid is facilitated to absorb heat of the cable body 10, and the stability of heat transfer is ensured.

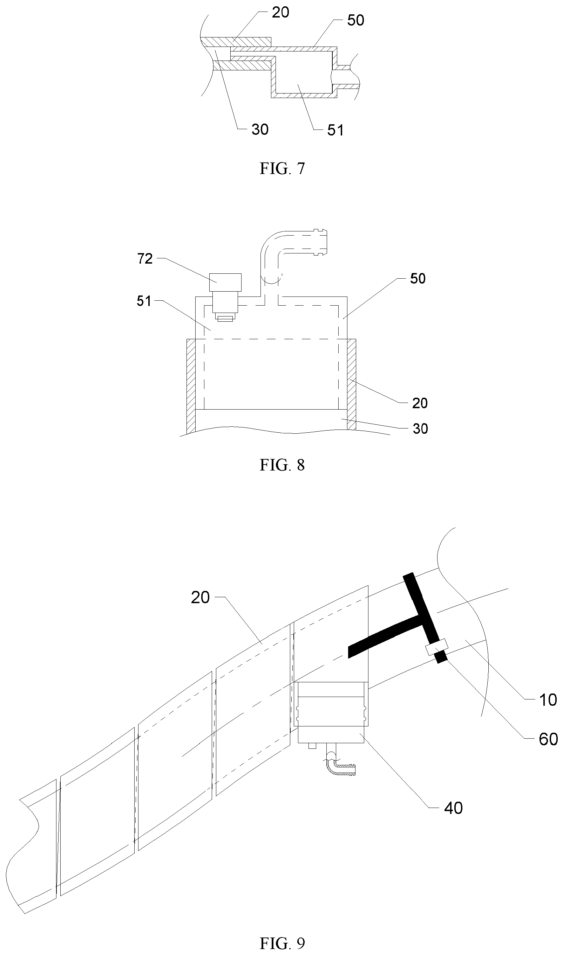

In an embodiment, the inlet joint of water 40 is provided with an inlet water buffer cavity 41. As shown in FIG.9-10, not covered by claims, and FIG.11-12 a cross-sectional area of the inlet water buffer cavity 41 is larger than a cross-sectional area of the lumen 30 communicating with the inlet joint of water 40. The inlet water buffer cavity 41 plays a role in buffering the cooling liquid, such that the flow velocity of the cooling liquid is more stable, the cooling liquid is facilitated to absorb heat of the cable body 10, and the stability of the cooling efficiency is ensured.

As shown in FIG. 13, the inlet joint of water 40 is sleeved on the cooling jacket 20, and the return joint of water 50 is sleeved on the cooling jacket 20. Further, the inlet joint of water 40 is inserted into the cooling jacket 20, and the return joint of water 50 is inserted into the cooling jacket 20, such that the inlet joint of water 40 and the cooling jacket 20 can be assembled more conveniently, and the return joint of water 50 and the cooling jacket 20 can be assembled more conveniently.

Furthermore, the inlet joint of water 40 is in interference fit with the cooling jacket 20, and a rubber layer is disposed between the inlet joint of water 40 and the cooling jacket 20; and the return joint of water 50 is in interference fit with the cooling jacket 20, and a rubber layer is disposed between the return joint of water 50 and the cooling jacket 20, such that the inlet joint of water 40 is connected to the cooling jacket 20 more tightly, and the return joint of water 50 is connected to the cooling jacket 20 more tightly, thereby improving the sealing performance.

In an embodiment of the present disclosure, the cooling jacket 20 is spiral in a free state and has elasticity, such that the cooling jacket 20 can be conveniently wound around outside of the cable body 10. The cooling jacket 20 may deform along with the cable body 10, such that the cooling jacket 20 is more tightly connected to the cable body 10. The cooling jacket 20 has the characteristic of automatic shape recovery, which is beneficial to matching an inner diameter of the cooling jacket 20 with an outer diameter of a cable, maintaining a certain interference fit, and ensuring the closeness of fit.

In an embodiment, a dimension in a width direction of the cooling jacket 20 in an assembled state accounts for 40-98% of a screw pitch. In the assembled state, the screw pitch of the cooling jacket 20 is a distance between the centers of two adjacent cooling jackets 20 along an axial direction of the cable body 10. When the percentage of the dimension in the width direction of the cooling jacket 20 in the screw pitch is too small, the cover area of the cooling jacket 20 on the cable body 10 is too small, the cooling effect cannot be achieved, and the temperature rise of the cable body 10 is unqualified. When the percentage of the dimension in the width direction of the cooling jacket 20 in the screw pitch is too large, although the temperature rise is qualified, the cooling jacket 20 is too tight, which easily leads to poor flexibility of the cable and failure of assembly.

To verify the influence of the percentage of the dimension in the width direction of the cooling jacket 20 in the screw pitch on the temperature rise of the cable structure, ten cables with the same sectional area, material, and length are selected by the inventor and applied with the same current, where percentages of dimensions in width directions of cooling jackets 20 in a screw pitch are different , the cables are cooled, and temperature rises of the cables are read and recorded in Table 2. According to an experimental method, in a closed environment, cables with cooling jackets 20 with different percentages of dimensions in width directions in a screw pitch are used and applied with the same current, stable temperatures before and after power on are recorded, difference operations are made, and absolute values are taken. In this embodiment, the temperature rise of less than 50 K is an qualified value.

To verify the influence of the percentage of the dimension in the width direction of the cooling jacket 20 in the screw pitch on the bending property of the cable structure, ten cables with the same sectional area, material, and length are selected by the inventor, the cables are bent to reach the maximum radian, an angle between a tangent line at one end of a circular arc and a tangent line at a midpoint of the circular arc is measured, and the angle is recorded in Table 2, where percentages of dimensions in width directions of cooling jackets 20 in a screw pitch are different. In this experiment, the angle of greater than 30° is an qualified value.

**Table 2: Influence of jacket cavities 20 with different percentages of dimensions in width directions in screw pitch on temperature rises and flexibility of cable structure**

| Percentage (%) of dimension in width direction of cooling jacket 20 in screw pitch | | | | | | | | | |
|---|---|---|---|---|---|---|---|---|---|
| 20 | 30 | 40 | 50 | 60 | 70 | 90 | 98 | 100 | 110 |

| Temperature rise (K) of cable structure | | | | | | | | | |
|---|---|---|---|---|---|---|---|---|---|
| 63.8 | 52.5 | 48.7 | 43.2 | 41.5 | 38.4 | 37.1 | 34.2 | 33.9 | 33.8 |

| Bending angle (°) of cable structure | | | | | | | | | |
|---|---|---|---|---|---|---|---|---|---|
| 105 | 96 | 85 | 77 | 68 | 53 | 46 | 35 | 28 | 22 |

As shown in FIG. 2, when the percentage of the dimension in the width direction of the cooling jacket 20 in the screw pitch is less than 40%, the cover area of the cooling jacket 20 on the cable body 10 is too small, the cooling effect cannot be achieved, and the temperature rise of the cable body 10 is unqualified. When the percentage of the dimension in the width direction of the cooling jacket 20 in the screw pitch is greater than 98%, although the temperature rise of the cable body 10 is qualified, the temperature rise is not significantly decreased, and the cable structure has an unqualified bending angle and poor bending property and flexibility, which easily leads to failure of assembly. Therefore, the percentage of the dimension in the width direction of the cooling jacket 20 in the screw pitch is selected by the inventor to range from 40% to 98%.

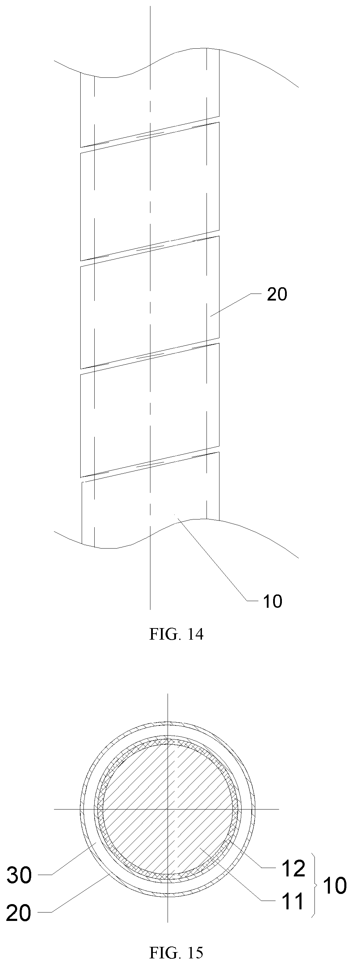

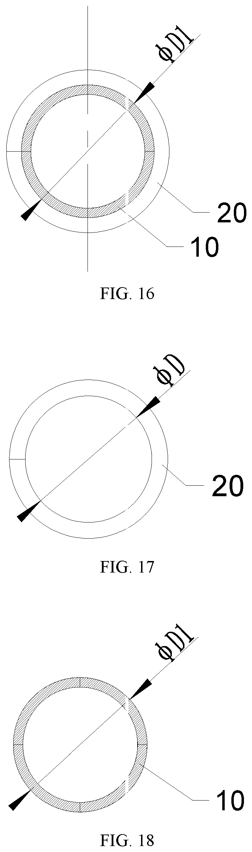

Further, the inner diameter of the cooling jacket 20 in the free state is less than the outer diameter of the cable body 10. As shown in FIG. 15 to FIG. 18, the inner diameter of the cooling jacket 20 in the free state is denoted as D, and the outer diameter of the cable body 10 is denoted as D1, where D1 ≥ D. The cooling jacket 20 is in interference fit with the cable body 10, such that the cooling jacket 20 is closely attached to the cable body 10. As shown in FIG. 15, the cable body 10 includes a cable core 11 and a cable insulating sheath 12, where a sidewall of the cooling jacket 20 is closely attached to a sidewall of the cable insulating sheath 12.

To ensure that the sidewall of the mounted cooling jacket 20 is closely attached to an outer wall of the cable body 10, it is necessary to ensure that a radial force Fr applied by the mounted cooling jacket 20 to the cable body 10 is greater than or equal to 2N. According to an actual mounting environment and a requirement on the acceptable outer diameter for a high voltage circuit, a radial deformation amount △D of the assembled cooling jacket 20 ranges from 4 mm to 8 mm, where △D = D1 - D. Therefore, an elastic modulus M of the cooling jacket 20 in a linear elastic deformation range is greater than or equal to Fr / △D. Within this range, the sidewall of the cooling jacket 20 can be closely attached to the outer wall of the cable body 10, so as to ensure efficient heat transfer and cooling efficiency.

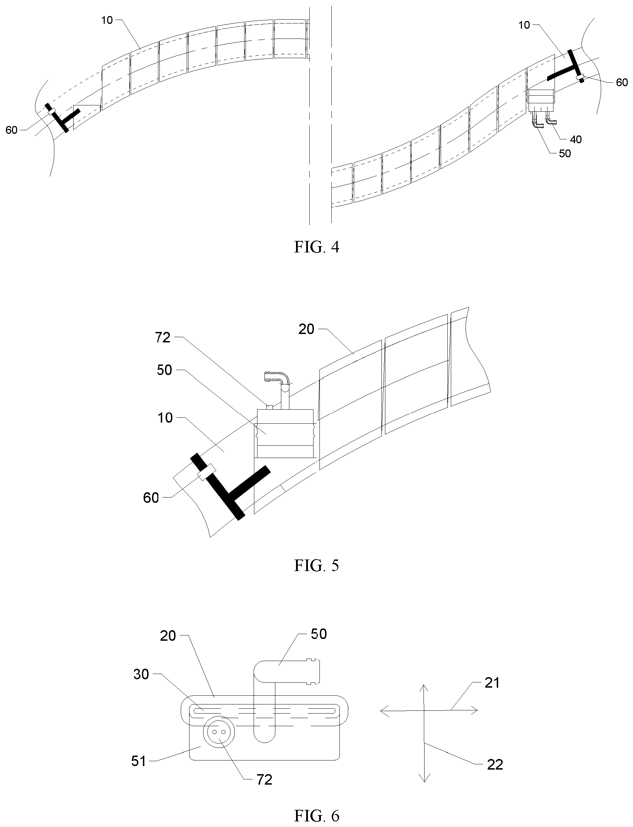

As shown in FIG. 5 and FIG.9, not covered by claims, the cooling jacket 20 and the cable body 10 may be fixed by a fixing tie strap 60. The fixing tie strap 60 can prevent the cooling jacket 20 from moving axially, such that the cooling jacket 20 is connected to the cable body 10 more firmly. The fixing tie strap 60 and the cooling jacket 20 may be connected to each other by means of gluing. Cooling jackets 20 with different inner diameters are matched according to the outer diameter of the cable body 10. The cooling jacket 20 may deform with the cable body and has a good attachment property. The cable can be mounted quickly, and the mounting process is simple and flexible. The cooling jacket 20 is tightly combined with the cable body 10 to achieve a good cooling effect on the cable body 10.

In an embodiment, the return joint of water 50 is connected to a temperature sensor 72. The temperature sensor 72 can provide a positive temperature coefficient or negative temperature coefficient (PTC or NTC) signal to a cooling controller 71 and provide the cooling controller 71 with cooling liquid temperature information, and the cooling controller 71 can systematically adjust power of a pump 84 and a heat exchange system by the temperature sensor 72 to improve the cooling effect.

In an embodiment, a cooling rate of the cooling jacket 20 ranges from 0.3 K/s to 10 K/s. To verify the influence of the cooling rate of the cooling jacket 20 on the temperature rise of the cable 10, ten cables with the same sectional area, material, and length are selected by the inventor and applied with the same current, cooling jackets 20 with different cooling rates are used to cool the cables, and temperature rises of the cables are obtained and recorded in Table 3.

The experimental method is that, in a closed environment, cables with cooling jackets 20 with different cooling rates are used and applied with the same current, stable temperatures before and after power on are recorded, difference operations are made, and absolute values are taken. In this embodiment, the temperature rise of less than 50 K is an qualified value.

**Table 3: Influence of cooling jackets 20 with different cooling rates on temperature rises of cable structure**

| Cooling rate of cooling jacket 20 | | | | | | | | | | | | |
|---|---|---|---|---|---|---|---|---|---|---|---|---|
| 0.01 | 0.03 | 0.3 | 0.5 | 1 | 3 | 5 | 7 | 8 | 9 | 10 | 11 | 13 |

| Temperature rise (K) of cable structure | | | | | | | | | | | | |
|---|---|---|---|---|---|---|---|---|---|---|---|---|
| 63.8 | 52.5 | 49.6 | 47.7 | 45.2 | 43.5 | 41.4 | 37.1 | 33.2 | 30.9 | 27.5 | 26.8 | 26.5 |

It can be seen from the above table that when the cooling rate of the cooling jacket 20 is less than 0.3 K/s, the temperature rise of the cable structure is less than the qualified value, and the higher the cooling rate of the cooling jacket 20 is, the lower the temperature rise is. When the cooling rate of the cooling jacket 20 is greater than 10 K/s, due to the influence of heat output of the cable itself and power of the cooling jacket 20 itself, the temperature rise is not significantly decreased, but the power of the cooling jacket 20 increases, which is not economical. Therefore, the cooling rate of the cooling jacket 20 is set by the inventor to 0.3-10 K/s.

The present disclosure provides a cable cooling device, including the cable structure according to independent claim 1. water 50.

The cable cooling device is capable of cooling the cable body 10 and may be applied to a vehicle, and the cable body 10 may be a high-power cable for the electric vehicle.

The cable cooling device includes a pump 84 and a cooling system 80, where the pump 84 and the cooling system 80 are connected to the inlet joint of water 40 and the return joint of water 50, the cooling system 80 cools the cooling liquid, and the pump 84 conveys the cooling liquid to the inlet joint of water 40 for cooling the cable body 10. When applied to the vehicle, the cable cooling device can be connected into a heat exchange system for the complete vehicle, where the heat exchange system for the complete vehicle functions as the pump 84 and the cooling system 80. The pump 84 and the cooling system 80 may also be built separately.

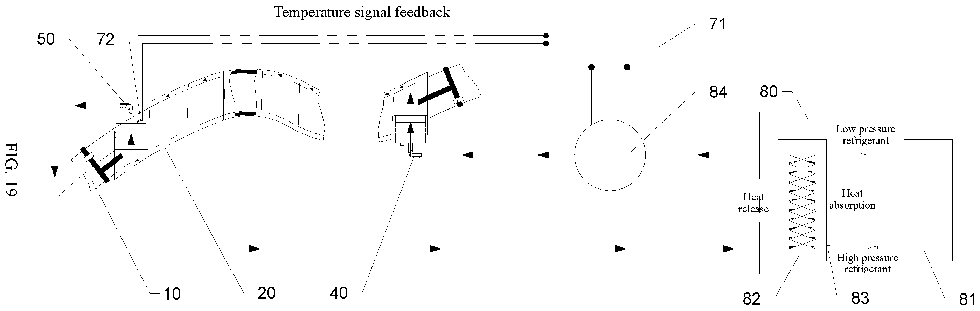

As shown in FIG. 19, the cooling system 80 includes a refrigeration system 81 and a heat exchanger 82, where an expansion valve 83 is disposed between the refrigeration system 81 and the heat exchanger 82. A cooling controller 71 is electrically connected to the pump 84.

The present disclosure provides a vehicle, including a pump 84, a cooling system 80, and the cable structure according to independent claim 1, where the pump 84 and the cooling system 80 are connected to an inlet joint of water 40. The cooling system 80 cools cooling liquid, and the pump 84 conveys the cooling liquid to the inlet joint of water 40 for cooling the cable body 10. The vehicle has the functions and effects of the above cable structure, which will not be repeated herein.

The cable body 10 in the cable structure may be a high-power cable for the electric vehicle. The cable structure can be connected into a heat exchange system for the complete vehicle, where the heat exchange system for the complete vehicle functions as the pump 84 and the cooling system 80. The pump 84 and the cooling system 80 may also be built separately.

## Claims

1. A cable structure, comprising a cable body (10) and a cooling jacket (20), wherein the cooling jacket (20) is wound around the cable body (10); and
the cooling jacket (20) is provided with a lumen (30), is connected to an inlet joint of water (40) and a return joint of water (50) which communicate with the lumen (30), and the cooling jacket (20) is configured to allow cooling liquid enter the lumen (30) through the inlet joint of water(40) and flow out through the return joint of water (50); wherein the inlet joint of water (40) and the return joint of water (50) are both disposed at the second end of the cooling jacket (20), **characterized in that**
the lumen (30) comprises a first cavity (31) and a second cavity (32) arranged side by side, a connection channel (34) is disposed at a first end of the cooling jacket (20), and the connection channel (34) communicates with the first cavity (31) and the second cavity (32) separately; and
the inlet joint of water (40) communicates with the first cavity (31), and the return joint of water (50) communicates with the second cavity (32); and
the cooling jacket (20) comprises a lumen partition (33) disposed between the first cavity (31) and the second cavity (32), and the connection channel (34) is a through hole formed in the lumen partition (33),
and a sidewall of the first cavity (31) and a sidewall of the second cavity (32) are both in contact with the cable body (10).

2. The cable structure according to claim 1, wherein a cross section of the lumen (30) is flat.

3. The cable structure according to claim 1 or 2, wherein a ratio of a dimension in a width direction (21) to a dimension in a thickness direction (22) of the lumen (30) ranges from 1 : 1 to 10 : 1.

4. The cable structure according to claim 1 or 2, wherein
the inlet joint of water (40) is provided with an inlet water buffer cavity (41), and a cross-sectional area of the inlet water buffer cavity (41) is greater than a cross-sectional area of the lumen (30) communicating with the inlet joint of water (40);
and/or the return joint of water (50) is provided with a return water buffer cavity (51), and a cross-sectional area of the return water buffer cavity (51) is greater than a cross-sectional area of the lumen (30) communicating with the return joint of water (50).

5. The cable structure according to claim 1 or 2, wherein the inlet joint of water (40) is sleeved on the cooling jacket (20); and/or the return joint of water (50) is sleeved on the cooling jacket (20).

6. The cable structure according to claim 5, wherein the inlet joint of water (40) is inserted into the cooling jacket (20); and/or the return joint of water (50) is inserted into the cooling jacket (20).

7. The cable structure according to claim 6, wherein the inlet joint of water (40) is in interference fit with the cooling jacket (20), and a rubber layer is disposed between the inlet joint of water (40) and the cooling jacket (20);
and/or the return joint of water (50) is in interference fit with the cooling jacket (20), and a rubber layer is disposed between the return joint of water (50) and the cooling jacket (20).

8. The cable structure according to claim 1 or 2, wherein the cooling jacket (20) is spiral in a free state and has elasticity.

9. The cable structure according to claim 8, wherein an inner diameter of the cooling jacket (20) in the free state is less than an outer diameter of the cable body (10); or
a dimension in a width direction of the cooling jacket (20) in an assembled state accounts for 40-98% of a screw pitch.

10. The cable structure according to claim 1, wherein the return joint of water (50) is connected to a temperature sensor (72); or
a cooling rate of the cooling jacket (20) ranges from 0.3 K/s to 10 K/s.

11. A cable cooling device, comprising a pump (84), a cooling system (80), and the cable structure according to claim 1,
wherein the pump (84) and the cooling system (80) are connected to the inlet joint of water (40) and the return joint of water (50).

12. A vehicle, comprising a pump (84), a cooling system (80), and the cable structure according to any one of claims 1 to 10, wherein the pump (84) and the cooling system (80) are connected to the inlet joint of water (40) and the return joint of water (50).

## Patentansprüche

1. Kabelstruktur, umfassend einen Kabelkörper (10) und einen Kühlmantel (20), wobei der Kühlmantel (20) um den Kabelkörper (10) gewickelt ist; und
der Kühlmantel (20) mit einem Lumen (30) versehen ist, das mit einem Wassereinlass (40) und einem Wasserrücklauf (50) verbunden ist, die mit dem Lumen (30) in Verbindung stehen, und der Kühlmantel (20) so konfiguriert ist, dass Kühlflüssigkeit durch den Wassereinlass (40) in das Lumen (30) eintritt und durch den Wasserrücklauf (50) austritt, wobei der Wassereinlass (40) und der Wasserrücklauf (50) sich jeweils am zweiten Ende des Kühlmantels (20) befinden, **dadurch gekennzeichnet, dass**
das Lumen (30) einen ersten Hohlraum (31) und einen zweiten Hohlraum (32) umfasst, die nebeneinander angeordnet sind, ein Verbindungskanal (34) an einem ersten Ende des Kühlmantels (20) angeordnet ist, und der Verbindungskanal (34) steht jeweils mit dem ersten Hohlraum (31) und dem zweiten Hohlraum (32) in Verbindung; und
der Wassereinlass (40) mit dem ersten Hohlraum (31) verbunden ist, und der Wasserrücklauf (50) mit dem zweiten Hohlraum (32) verbunden ist; und
der Kühlmantel (20) eine Lumentrennwand (33), die zwischen dem ersten Hohlraum (31) und dem zweiten Hohlraum (32) angeordnet ist, wobei der Verbindungskanal (34) eine in der Lumentrennwand (33) ausgebildete Durchgangsbohrung ist und sowohl eine Seitenwand des ersten Hohlraums (31) als auch eine Seitenwand des zweiten Hohlraums (32) mit dem Kabelkörper (10) in Kontakt stehen.

2. Kabelstruktur nach Anspruch 1, wobei ein Querschnitt des Lumens (30) flach ist.

3. Kabelstruktur nach Anspruch 1 oder 2, wobei das Verhältnis einer Abmessung in Breitenrichtung (21) zu einer Abmessung in Dickenrichtung (22) des Lumens (30) im Bereich von 1:1 zu 10:1 liegt.

4. Kabelstruktur nach Anspruch 1 oder 2, wobei
der Wassereinlass (40) mit einem Einlasswasserpufferraum (41) versehen ist, und eine Querschnittsfläche des Einlasswasserpufferraums (41) größer ist als die Querschnittsfläche des Lumens (30), das mit dem Wassereinlass (40) in Verbindung steht;
und/oder der Wasserrücklauf (50) mit einem Rücklaufwasserpufferraum (51) versehen ist, und eine Querschnittsfläche des Rücklaufwasserpufferraums (51) größer ist als die Querschnittsfläche des Lumens (30), das mit dem Wasserrücklauf (50) in Verbindung steht.

5. Kabelstruktur nach Anspruch 1 oder 2, wobei der Wassereinlass (40) auf dem Kühlmantel (20) aufgesetzt ist; und/oder der Wasserrücklauf (50) auf den Kühlmantel (20) aufgesetzt ist.

6. Kabelstruktur nach Anspruch 5, wobei der Wassereinlass (40) in den Kühlmantel (20) eingeführt ist; und/oder der Wasserrücklauf (50) in den Kühlmantel (20) eingeführt ist.

7. Kabelstruktur nach Anspruch 6, wobei der Wassereinlass (40) mit dem Kühlmantel (20) presspassend ist und zwischen dem Wassereinlass (40) und dem Kühlmantel (20) eine Gummischicht angeordnet ist;
und/oder der Wasserrücklauf (50) mit dem Kühlmantel (20) presspassend verbunden ist, und zwischen dem Wasserrücklauf (50) und dem Kühlmantel (20) eine Gummischicht angeordnet ist.

8. Kabelstruktur nach Anspruch 1 oder 2, wobei der Kühlmantel (20) spiralförmig und frei angeordnet ist und Elastizität aufweist.

9. Kabelstruktur nach Anspruch 8, wobei ein Innendurchmesser des Kühlmantels (20) im freien Zustand kleiner ist als der Außendurchmesser des Kabelkörpers (10); oder
eine Abmessung in Breitenrichtung des Kühlmantels (20) im montierten Zustand 40-98% einer Schraubensteigung entspricht.

10. Kabelstruktur nach Anspruch 1, wobei der Wasserrücklauf (50) mit einem Temperatursensor (72) verbunden ist; oder
eine Abkühlrate des Kühlmantels (20) im Bereich von 0,3 K/s bis 10 K/s liegt.

11. Kabelkühlvorrichtung, umfassend eine Pumpe (84), ein Kühlsystem (80) und die Kabelstruktur nach Anspruch 1,
wobei die Pumpe (84) und das Kühlsystem (80) mit den Wassereinlass (40) und den Wasserrücklauf (50) verbunden sind.

12. Fahrzeug, umfassend eine Pumpe (84), ein Kühlsystem (80) und die Kabelstruktur nach einem der Ansprüche 1 bis 10, wobei die Pumpe (84) und das Kühlsystem (80) mit dem Wassereinlass (40) und dem Wasserrücklauf (50) verbunden sind.

## Revendications

1. Structure de câble, comprenant un corps de câble (10) et une gaine de refroidissement (20), dans laquelle la gaine de refroidissement (20) est enroulée autour du corps de câble (10) ; et
la gaine de refroidissement (20) est pourvue d'une lumière (30), est reliée à un joint d'entrée d'eau (40) et à un joint de retour d'eau (50) qui communiquent avec la lumière (30), et la gaine de refroidissement (20) est configurée pour permettre à un liquide de refroidissement de pénétrer dans la lumière (30) par l'intermédiaire du joint d'entrée d'eau (40) et de s'écouler par l'intermédiaire du joint de retour d'eau (50) ; dans laquelle le joint d'entrée d'eau (40) et le joint de retour d'eau (50) sont tous les deux disposés à la seconde extrémité de la gaine de refroidissement (20), **caractérisée en ce que**
la lumière (30) comprend une première cavité (31) et une seconde cavité (32) agencées côte à côte, un canal de liaison (34) est disposé à une première extrémité de la gaine de refroidissement (20), et le canal de liaison (34) communique avec la première cavité (31) et la seconde cavité (32) séparément ; et
le joint d'entrée d'eau (40) communique avec la première cavité (31), et le joint de retour d'eau (50) communique avec la seconde cavité (32) ; et
la gaine de refroidissement (20) comprend une cloison de lumière (33) disposée entre la première cavité (31) et la seconde cavité (32), et le canal de liaison (34) est un trou traversant formé dans la cloison de lumière (33), et une paroi latérale de la première cavité (31) et une paroi latérale de la seconde cavité (32) sont toutes les deux en contact avec le corps de câble (10).

2. Structure de câble selon la revendication 1, dans laquelle une coupe transversale de la lumière (30) est plate.

3. Structure de câble selon la revendication 1 ou 2, dans laquelle un rapport d'une dimension dans une direction de largeur (21) à une dimension dans une direction d'épaisseur (22) de la lumière (30) va de 1:1 à 10:1.

4. Structure de câble selon la revendication 1 ou 2, dans laquelle
le joint d'entrée d'eau (40) est pourvu d'une cavité tampon d'eau d'entrée (41), et une superficie en coupe transversale de la cavité tampon d'eau d'entrée (41) est plus grande qu'une superficie en coupe transversale de la lumière (30) communiquant avec le joint d'entrée d'eau (40) ;
et/ou le joint de retour d'eau (50) est pourvu d'une cavité tampon d'eau de retour (51), et une superficie en coupe transversale de la cavité tampon d'eau de retour (51) est plus grande qu'une superficie en coupe transversale de la lumière (30) communiquant avec le joint de retour d'eau (50).

5. Structure de câble selon la revendication 1 ou 2, dans laquelle le joint d'entrée d'eau (40) est emmanché sur la gaine de refroidissement (20) ; et/ou le joint de retour d'eau (50) est emmanché sur la gaine de refroidissement (20).

6. Structure de câble selon la revendication 5, dans laquelle le joint d'entrée d'eau (40) est inséré dans la gaine de refroidissement (20) ; et/ou le joint de retour d'eau (50) est inséré dans la gaine de refroidissement (20).

7. Structure de câble selon la revendication 6, dans laquelle le joint d'entrée d'eau (40) est ajusté avec serrage sur la gaine de refroidissement (20), et une couche de caoutchouc est disposée entre le joint d'entrée d'eau (40) et la gaine de refroidissement (20) ;
et/ou le joint de retour d'eau (50) est ajusté avec serrage sur la gaine de refroidissement (20), et une couche de caoutchouc est disposée entre le joint de retour d'eau (50) et la gaine de refroidissement (20).

8. Structure de câble selon la revendication 1 ou 2, dans laquelle la gaine de refroidissement (20) est en spirale à l'état libre et présente une élasticité.

9. Structure de câble selon la revendication 8, dans laquelle un diamètre intérieur de la gaine de refroidissement (20) à l'état libre est inférieur à un diamètre extérieur du corps du câble (10) ; ou
une dimension dans une direction de largeur de la gaine de refroidissement (20) à l'état assemblé représente 40 à 98 % d'un pas de vis.

10. Structure de câble selon la revendication 1, dans laquelle le joint de retour d'eau (50) est relié à un capteur de température (72) ; ou
une vitesse de refroidissement de la gaine de refroidissement (20) va de 0,3 K/s à 10 K/s.

11. Dispositif de refroidissement de câble comprenant une pompe (84), un système de refroidissement (80) et la structure de câble selon la revendication 1,
dans lequel la pompe (84) et le système de refroidissement (80) sont reliés au joint d'entrée d'eau (40) et au joint de retour d'eau (50).

12. Véhicule comprenant une pompe (84), un système de refroidissement (80) et la structure de câble selon l'une quelconque des revendications 1 à 10, dans lequel la pompe (84) et le système de refroidissement (80) sont reliés au joint d'entrée d'eau (40) et au joint de retour d'eau (50).
